# EUROPÄISCHE PATENTANMELDUNG

(11) **EP 4 194 140 A1**
(43) Veröffentlichungstag der Anmeldung: **14.06.2023**
(21) Anmeldenummer: 21213350.8
(22) Anmeldetag: 09.12.2021
(51) Int. Cl.: B23P 19/00, B25B 23/06, B25J 11/00, E21D 20/00

(54) **MAGAZIN SOWIE WERKZEUGMASCHINE MIT EINEM MAGAZIN**

(71) Anmelder: Hilti Aktiengesellschaft, 9494 Schaan (LI)
(72) Erfinder: Lukic, Sasha, 9470 Buchs (CH); Milito, Claudio, 6833 Schnifis (AT)
(74) Vertreter: Hilti Aktiengesellschaft Corporate Intellectual Property

(57) **Zusammenfassung**

Die Erfindung betrifft ein Magazin (102) zur Aufnahme von Ankern (104). Das Magazin (102) umfasst einen Zentralkörper (106), wobei der Zentralkörper (106) wenigstens eine Aufnahme (108) für einen Anker (104) aufweist, wobei die Aufnahme (108) zwei Klammerarme (120) aufweist. Die Erfindung betrifft des Weiteren eine Werkzeugmaschine mit einem Magazin (102). In das Magazin können verschiedenartige Anker (104) und / oder Werkzeuge aufgenommen werden.

## Beschreibung

Die Erfindung betrifft ein Magazin zur Aufnahme von Ankern, wie es beispielsweise als Vorsatzgerät in Verbindung mit einem Setzgerät, beispielsweise einem Schlagschrauber, verwendet wird.

Derartige Magazine sind regelmäßig nur für wenige Arten von Ankern, oftmals lediglich für eine einzige Art von Ankern, verwendbar.

Aufgabe der vorliegenden Erfindung ist es daher, ein Magazin sowie eine Werkzeugmaschine mit einem solchen Magazin anzubieten, die eine Vielfalt verschiedener Anker aufnehmen können.

Gelöst wird die Aufgabe durch **ein Magazin** zur Aufnahme von Ankern, umfassend einen Zentralkörper, wobei der Zentralkörper wenigstens eine Aufnahme für einen Anker aufweist, wobei die Aufnahme zwei Klammerarme aufweist.

Die zwei Klammerarme können voneinander weg spreizbar sein. Sie können eingerichtet sein, eine Tendenz aufzuweisen, sich aufeinander zu zubewegen und / oder gegeneinander zu pressen. Dazu können die Klammerarme beispielsweise ein Federelement aufweisen. Das Federelement kann eingerichtet sein, die Klammerarme aufeinander zu zu bewegen und / oder gegeneinander zu pressen. Das Federelement kann, insbesondere einstückig, an wenigstens einem der beiden Klammerarme ausgebildet sein. Das Federelement kann aus einem elastischen Material, beispielsweise einen Kunststoff und / oder einem Metall, ausgebildet sein.

Die Klammerarme können insbesondere nach Art einer Wäscheklammer ausgebildet sein.

Somit ist es möglich, dass die Klammerarme in unterschiedlichen Abständen voneinander und / oder in unterschiedlichen Winkeln zueinander gespreizt sind. Zwischen den Klammerarmen kann ein Anker aufgenommen sein. Insbesondere können unterschiedliche Typen von Ankern zwischen den Klammerarme aufgenommen werden, wobei die Typen sich beispielsweise in einem Durchmesser unterscheiden können. Somit kann eine Vielzahl unterschiedlicher Anker mit jeweils unterschiedlichen Größen zwischen den Klammerarmen und damit in der Aufnahme aufnehmbar sein.

Der Zentralkörper kann als Scheibe ausgebildet sein. Mit anderen Worten kann er scheibenförmig sein. Der Zentralkörper kann ellipsenförmig oder zumindest im Wesentlichen ellipsenförmig ausgebildet sein. Insbesondere kann er einen kreisförmigen Querschnitt oder zumindest einen im Wesentlichen kreisförmigen Querschnitt aufweisen. Unter "im Wesentlichen kreisförmig" kann eine n-zählige Drehsymmetrie verstanden werden.

Anker können beispielsweise Schrauben, Nägel, Dübel und / oder Bolzen sein.

Die Aufnahme kann genau zwei Klammerarme oder zumindest höchstens zwei Klammerarme aufweisen. Somit kann die Aufnahme seitlich geöffnet sein und / oder öffenbar sein. Der Anker kann somit entlang einer radialen Richtung des Zentralkörpers, insbesondere seitlich, in die Aufnahme eingeführt werden.

Dazu kann alternativ oder ergänzend wenigstens einer der Klammerarme ein freies Ende aufweisen. Insbesondere können beide Klammerarme jeweils ein freies Ende aufweisen. Somit kann der wenigstens eine Klammerarm vom Zentralkörper abragen. Er kann insbesondere seitlich von dem Zentralkörper abragen.

Der Zentralkörper kann eine Zentralachse aufweisen. Insbesondere kann er an einer Zentralachse drehbar gelagert sein.

Weist der Zentralkörper die Zentralachse auf, so kann unter "seitlich" eine Tangentialfläche senkrecht zu einer radialer Richtung der Zentralachse verstanden werden.

Sind am Zentralkörper mehrere Aufnahmen ausgebildet, so können diese entlang einer Kreislinie angeordnet und / oder ausgebildet sein.

Der Zentralkörper kann insbesondere drehsymmetrisch sein. Unter "drehsymmetrisch" kann insbesondere eine n-zählige, insbesondere mit n>1, Drehsymmetrie verstanden werden. N kann beispielsweise gleich 6, 9, 12, 24, 48, 64, 96 oder größer sein. Der Zentralkörper kann somit ähnlich zu einer Trommel eines Revolvers, insbesondere mit an seinem Rand umlaufend angeordneten Aufnahmen, gebildet sein.

Somit kann durch Drehen des Zentralkörpers um die Zentralachse jede der Aufnahmen, oder zumindest eine der Aufnahmen, positioniert werden.

Beispielsweise kann somit ein in einer beliebigen Aufnahme aufgenommener Anker zu einer Ladeposition gebracht werden. Von der Ladeposition aus kann der Anker zu einer Setzposition gebracht werden. An der Setzposition kann dann das Setzgerät angreifen und den Anker beispielsweise in eine Betonwand setzen.

Das Magazin kann mehrere Aufnahmen aufweisen, sodass gleichzeitig mehrere Anker im Magazin aufnehmbar sind. Die Aufnahmen können jeweils gleichartig aufgebaut sein. In diese Aufnahmen können Anker unterschiedlichem Typs aufgenommen und / oder aufnehmbar sein.

Das Magazin kann einen Drehantrieb zur Drehung des Zentralkörpers um die Zentralachse aufweisen. Der Drehantrieb kann als Riemenantrieb, Kettenantrieb, Zahnradantrieb, pneumatischer, hydraulischer und / oder elektrischer Antrieb ausgebildet sein. Beispielsweise kann er ein elektrischen Motor aufweisen. Dann kann der Zentralkörper bei Bedarf um die Zentralachse gedreht werden. Somit kann ein Anker selbsttätig durch das Magazin und / oder die Werkzeugmaschine ausgewählt und in die Ladeposition gebracht werden.

Das Magazin kann auch eine Hubvorrichtung und / oder eine Senkvorrichtung (im Folgenden: Hub- und / oder Senkvorrichtung) aufweisen, die eingerichtet ist oder sind, den Zentralkörper in einer zur Zentralachse senkrechten Ebene zu verlagern. Die Hub- und / oder Senkvorrichtung kann als Riemenantrieb, Kettenantrieb, Zahnradantrieb, pneumatischer, hydraulischer und / oder elektrischer Antrieb ausgebildet sein.

Das Magazin kann an einer Werkzeugmaschine, insbesondere einem Setzgerät, angeordnet sein.

Die Hub- und / oder Senkvorrichtung kann eine der Aufnahmen und / oder einen in der jeweiligen Aufnahme enthaltenen Anker zum Setzgerät bewegen. Mithin kann ein in der Aufnahme enthaltener Anker zu der Setzposition gebracht werden. Das Setzgerät kann dann den Anker beispielsweise in eine Wand, eine Decke und / oder in einen Boden setzen.

In einer der Aufnahmen kann ein Anker eines ersten Typs und in einer anderen, zweiten Aufnahme, ein Anker eines zweiten Typs aufgenommen sein. Mit anderen Worten können unterschiedliche Typen von Ankern gleichzeitig im Magazin aufgenommen sein. Verschiedene Anker können somit in demselben Magazin bereitgestellt werden.

Denkbar ist auch, dass in das Magazin wenigstens ein Werkzeug aufnehmbar und / oder aufgenommen ist. Beispielsweise ist denkbar, dass im Magazin ein Bohrwerkzeug zusammen mit wenigstens einem Anker aufgenommen ist.

Es können im Magazin insbesondere auch mehrere Werkzeuge unterschiedlichen Typs sowie mehrere Anker unterschiedlichen Typs aufgenommen sein. Beispielsweise können alle Werkzeuge und / oder alle Anker einen zylinderförmigen Abschnitt, beispielsweise einen Schaft, aufweisen. Dann können die Werkzeuge und / oder die Anker an ihren zylinderförmigen Abschnitt zwischen den Klammerarmen der Aufnahmen aufgenommen sein.

Somit können auch komplexe Bauarbeiten rasch durchgeführt werden. Beispielsweise kann ein Magazin ein Hammerbohrwerkzeug, einen Dübel sowie eine Schraube aufweisen. Das Magazin kann an einer Bohrhammermaschine angeordnet sein. Dann kann zunächst das Hammerbohrwerkzeug ausgewählt und in die Setzposition gebracht werden. Dort kann es in eine Werkzeugaufnahme der Bohrhammermaschine eingespannt werden. Die Bohrhammermaschine kann ein Bohrloch, beispielsweise in eine Betonelement, beispielsweise eine Betonwand, eine Betondecke oder ein Betonboden, bohren. Dann kann das Hammerbohrwerkzeug zurück ins Magazin verbracht werden. Der Dübel kann ausgewählt und zur Setzposition gebracht werden, von wo aus die Bohrhammermaschine, beispielsweise mit ihrer Werkzeugaufnahme, den Dübel in das Bohrloch setzen kann. Anschließend kann dann die Schraube ausgewählt und in die Setzposition gebracht werden, von wo aus die Bohrhammermaschine diese in den Dübel setzen, insbesondere einschrauben kann. Dazu kann die Werkzeugaufnahme ausgebildet sein, einen Kopf der Schraube zu greifen. Alternativ oder ergänzend kann vor dem Einschrauben ein für die Schraube geeignetes Setzwerkzeug, beispielsweise ein Schraub-Bit, in die Werkzeugaufnahme gebracht werden. Zuvor kann auch das Setzwerkzeug in einer der Aufnahmen aufgenommen gewesen sein.

In den Rahmen der Erfindung fällt des Weiteren **eine Werkzeugmaschine mit einem Magazin,** wie es vorangehend beschrieben worden ist.

Die Werkzeugmaschine kann zum Einsatz auf einer Baustelle, beispielsweise einer Hochbau-Baustelle und / oder einer Tiefbau-Baustelle eingerichtet sein. Sie kann zur Ausführung von Bauarbeiten an einer Decke, einer Wand und / oder einem Boden eingerichtet sein. Sie kann insbesondere zum Setzen eines Ankers eingerichtet sein.

Denkbar ist aber auch, dass sie für Funktionen wie Bohren und / oder Hämmern, Trennen, beispielsweise Meißeln, Sägen oder Schneiden, Pressen und / oder Schleifen ausgebildet ist. Sie kann insbesondere eingerichtet sein, ein Werkzeug aufzunehmen und je nach Art des Werkzeugs ein oder mehrere dieser Funktionen auszuführen. Sie kann somit multifunktional sein. Ein für eine dieser Funktionen erforderliches Werkzeug kann in einer der Aufnahmen des Magazins aufgenommen sein.

Dementsprechend kann die Werkzeugmaschine eingerichtet sein, ein Werkzeug, beispielsweise ein Bohrwerkzeug, ein Trennwerkzeug, beispielsweise ein Meißelwerkzeug, ein Sägeblatt oder ein Messer, ein Presswerkzeug, ein Schleifwerkzeug, beispielsweise eine Schleifscheibe, oder ein Messwerkzeug aufzunehmen.

Mithilfe des Messwerkzeugs ist es beispielsweise möglich, die Qualität einer ausgeführten Funktion zu überprüfen.

Die Werkzeugmaschine kann eine mobile Werkzeugmaschine sein.

Als mobile Werkzeugmaschine kann die Werkzeugmaschine tragbar sein. Sie kann dazu ein Gewicht von höchstens 43 kg, besonders bevorzugt von höchstens 25 kg, insbesondere von höchstens 10 kg, beispielsweise höchstens 5 kg, aufweisen. Die Werkzeugmaschine kann beispielsweise eine elektrische Handwerkzeugmaschine sein.

Dabei kann "mobil" auch umfassen, dass die Werkzeugmaschine eingerichtet ist, temporär, beispielsweise zur Ausführung einer Bauarbeit, an eine Oberfläche fixiert zu sein. Somit können beispielsweise auch ständergeführte Handwerkzeugmaschinen mitumfasst sein.

Alternativ oder ergänzend zur Tragbarkeit kann die Werkzeugmaschine eine mobile Plattform aufweisen. Die mobile Plattform kann ein Fahrwerk, beispielsweise ein Kettenfahrwerk und / oder ein Räderfahrwerk, aufweisen.

Insbesondere kann die Werkzeugmaschine auch als Bauroboter ausgebildet sein. Dazu kann sie einen Manipulator aufweisen. Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Am Manipulator kann ein Endeffektor angeordnet und / oder ausgebildet sein. Der Endeffektor kann eingerichtet sein, mittelbar und / oder unmittelbar eine weitere Werkzeugmaschine, insbesondere ein Setzgerät, aufzunehmen. Alternativ oder ergänzend kann er auch als weitere Werkzeugmaschine ausgebildet sein.

Die Werkzeugmaschine kann elektrisch betreibbar sein. Insbesondere kann sie kabellos elektrisch betreibbar sein. Dazu kann sie einen Akkumulator aufweisen. Der Akkumulator kann Lithium-basiert sein.

Die Werkzeugmaschine kann eine Steuerung aufweisen. Die Steuerung kann als Rechnereinheit ausgebildet sein. Sie kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, bei Ausführung auf dem Prozessor das Magazin zu steuern, insbesondere eine Aufnahme und / oder einen in der Aufnahme aufgenommenen Gegenstand, beispielsweise einen Anker oder ein Werkzeug, zu bewegen, beispielsweise um die Aufnahme, den Anker oder das Werkzeug zu der Setzposition zu bringen.

In den Rahmen der Erfindung fällt auch eine Verwendung der Werkzeugmaschine, insbesondere einer als Bauroboter ausgebildeten Werkzeugmaschine, die verwendet werden kann, um auf einer Baustelle nacheinander mehrere Anker zu setzen.

Beispielsweise kann eine Bauaufgabe darin bestehen, an einer Decke ein Installationselement zu befestigen. Dazu können nacheinander an unterschiedlichen Positionen des Installationselements Anker, beispielsweise Schraubanker, in eine Betondecke und insbesondere durch das Installationselement hindurch gesetzt werden. Dazu kann die als Bauroboter ausgebildete Werkzeugmaschine nacheinander einen der Anker aus dem Magazin auswählen, diesen Anker an eine vorbestimmte Position rotieren, insbesondere um die Zentralachse, dann beispielsweise mithilfe der Hub- und / oder Senkvorrichtung und / oder des Linearantriebs in eine Setzposition bringen. Von dieser Setzposition ausgehend kann dann ein Setzgerät, insbesondere der Werkzeugmaschine, den Anker, also in diesem Ausführungsbeispiel die Betonschraube, in die Decke einschrauben.

Anschließend kann der Zentralkörper weitergedreht werden, sodass ein nachfolgender Anker in die Setzposition gebracht und von dort aus in die Decke gesetzt, insbesondere geschraubt, werden kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Bauroboter;
- Fig. 2: ein Setzgerät mit einem Magazin, in dem mehrere Anker aufgenommen sind;
- Fig. 3: einen Zentralkörper;
- Fig. 4: einen Ausschnitt des Zentralkörpers gemäß Fig. 3 mit einer Aufnahme;
- Fig. 5: eine Detailansicht auf ein Magazin mit mehreren darin aufgenommenen Ankern in einer perspektivischen Darstellung; und
- Fig. 6 bis Fig. 10: mehrere Etappen eines Setzvorganges unter Verwendung eines Setzgeräts mit einem Magazin.

In der nachfolgenden Beschreibung der Figuren werden zur Erleichterung des Verständnisses der Erfindung für gleiche oder sich funktional entsprechende Elemente jeweils die gleichen Bezugszeichen verwendet.

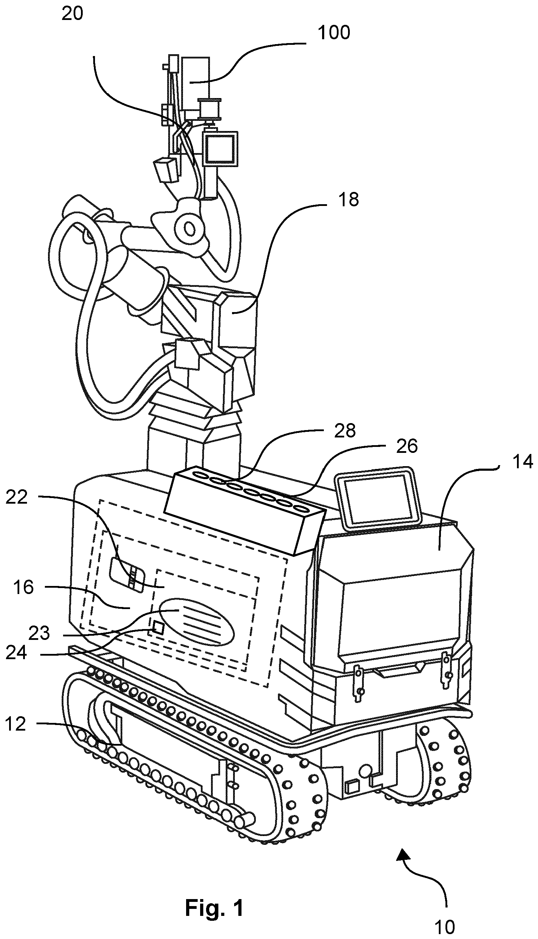

**Fig. 1** zeigt eine Werkzeugmaschine in Form eines Bauroboters **10**.

Der Bauroboter 10 weist eine mobile Plattform mit einem als Kettenfahrwerk ausgebildeten Fahrwerk **12** auf. In einem Gehäuse **14** ist ein schematisch dargestellter Steuerraum **16** ausgebildet. Oberseitig des Gehäuses 14 befindet sich ein Manipulator **18**. Der Manipulator 18 ist als multiaxial steuerbarer Arm ausgebildet, an dessen freien Ende ein Endeffektor **20** mit einem, in Fig. 1 lediglich schematisch dargestellten, Setzgerät **100** angeordnet ist.

Der Bauroboter 10 ist zur Ausführung von Bauaufgaben, insbesondere zum Setzen von Ankern in Decken und / oder Wänden, auf einer Baustelle, beispielsweise auf einer Hochbau-Baustelle, ausgebildet.

Innerhalb des Gehäuses 14, insbesondere im Steuerraum 16, ist eine Rechnereinheit **22** angeordnet. Die Rechnereinheit 22 ist mit ausführbarem Programmcode **23** ausgestattet. Er ist eingerichtet, bei Ausführung auf einem Mikroprozessor **24** der Rechnereinheit 22 den Manipulator 18 und das Setzgerät 100 zu steuern, so dass ein oder mehrere Anker an bestimmten Positionen, beispielsweise durch BIM (building information model)-Daten definierte Positionen, gesetzt werden können.

Der Bauroboter 10 weist ein Zwischenlager **26** auf. Das Zwischenlager 26 weist mehrere Lagerstellen 28 auf. Die Lagerstellen 28 können beispielsweise Steckplätze sein. Sie können eingerichtet sein, Anker aufzunehmen und für eine Verwendung mit dem Setzgerät 100 zur Verfügung zu stellen. Das Zwischenlager 26 kann eingerichtet sein, eine große Anzahl von Ankern aufzunehmen. Beispielsweise kann es eingerichtet sein, 100 oder mehr Anker aufzunehmen.

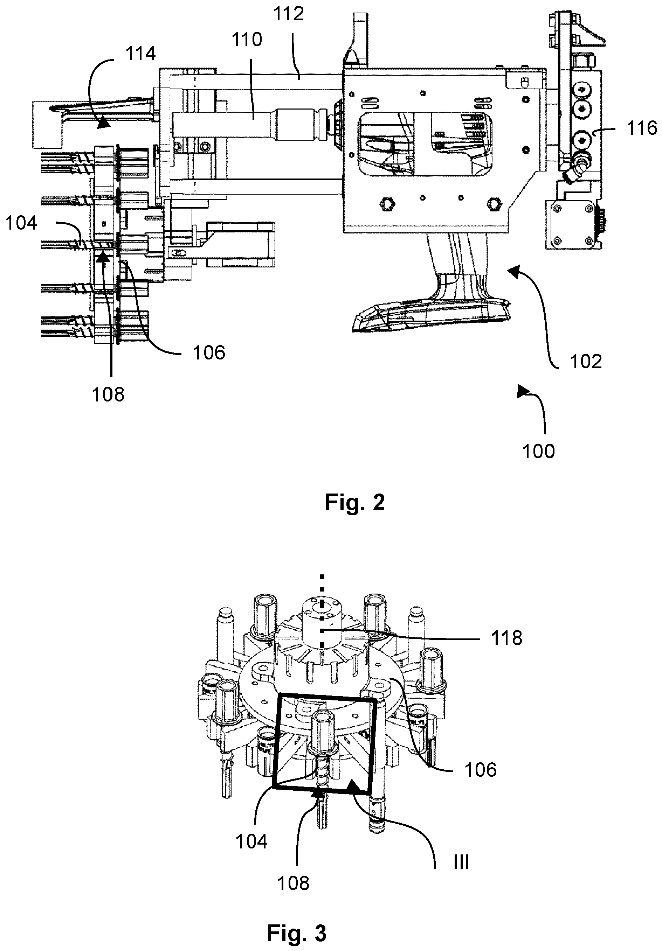

**Fig. 2** zeigt das Setzgerät 100 in einer Seitenansicht.

Am Setzgerät 100 ist ein Magazin **102** angeordnet. Das Magazin 102 ist zur Aufnahme von Ankern, beispielsweise von Ankern **104**, ausgebildet. Aus Vereinfachungsgründen ist von den Ankern 104 lediglich einer mit einem Bezugszeichen versehen.

Die Anker 104 sind an einem Zentralkörper **106** des Magazins 102 angeordnet. Dazu weist der Zentralkörper 106 mehrere Aufnahmen **108** für die Anker 104 auf. Auch von diesen Aufnahmen 108 ist aus Vereinfachungsgründen lediglich eine mit einem Bezugszeichen versehen.

Das Setzgerät 100 weist ein Setzwerkzeug **110** auf. Entlang eines Linearantriebs **112** ist das Setzgerät 100 nach vorne, also zum Magazin 102 hin, verschiebbar. Somit kann ein Anker 104 an einer Setzposition **114** angeordnet werden. Anschließend kann das Setzgerät 100 zur Setzposition 114 und damit zum Anker 104 verlagert werden. Der Anker 104 kann dann beispielsweise in eine Wand oder eine Decke (beide in Fig. 2 nicht dargestellt) gesetzt werden.

Zusätzlich weist das Setzgerät 100 eine Schnittstelle **116** auf. Die Schnittstelle 116 dient zur Montage des Setzgeräts 100, insbesondere einschließlich des Magazins 102, am Endeffektor 20 des Bauroboters 10 (siehe Fig. 1). Sie ist eingerichtet, Steuersignale von der Rechnereinheit 22 (siehe Fig. 1) zum Setzgerät 100 und / oder zum Magazin 102 zu übermitteln. Denkbar ist auch, dass die Schnittstelle zur bidirektionalen Kommunikation eingerichtet ist.

**Fig. 3** zeigt den Zentralkörper 106 des Magazins 102 aus Fig. 2.

Der Zentralkörper 106 weist eine Zentralachse **118** auf. Der Zentralkörper 106 ist drehsymmetrisch ausgebildet. Insbesondere weist er eine 10-zählige Drehsymmetrie auf. Seitlich sind mehrere Aufnahmen 108 am Zentralkörper 106 ausgebildet. In diesen Aufnahmen 108 sind Anker 104 aufgenommen.

Die einzelnen Aufnahmen 108 sind in diesem Ausführungsbeispiel gleichartig aufgebaut.

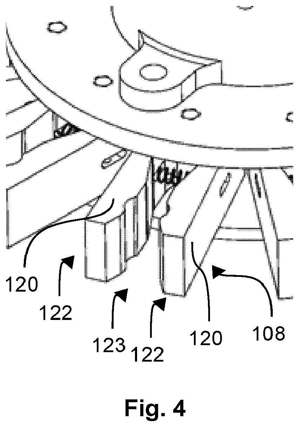

Anhand von **Fig. 4** wird ein solcher Aufbau einer der Aufnahmen 108 näher erläutert. Dazu zeigt Fig. 4 einen Ausschnitt **III** aus Fig. 3 mit einer Aufnahme 108, wobei jedoch der in der Aufnahme 108 gemäß Fig. 3 angeordnete Anker 104 nicht abgebildet ist.

Die Aufnahme 108 weist zwei Klammerarme **120** auf. Die Klammerarme 120 sind aus einem elastisch verformbaren Metall ausgefertigt. Sie bilden somit zugleich Federelemente. Jeder der Klammerarme 120 weist jeweils ein freies Ende **122** auf. Zwischen den beiden freien Enden 122 ist somit eine Öffnung **123** der Aufnahme 108 ausgebildet. Ein Anker 104 (Fig. 2) kann somit von einer Seite in die Aufnahme 108 eingeschoben werden.

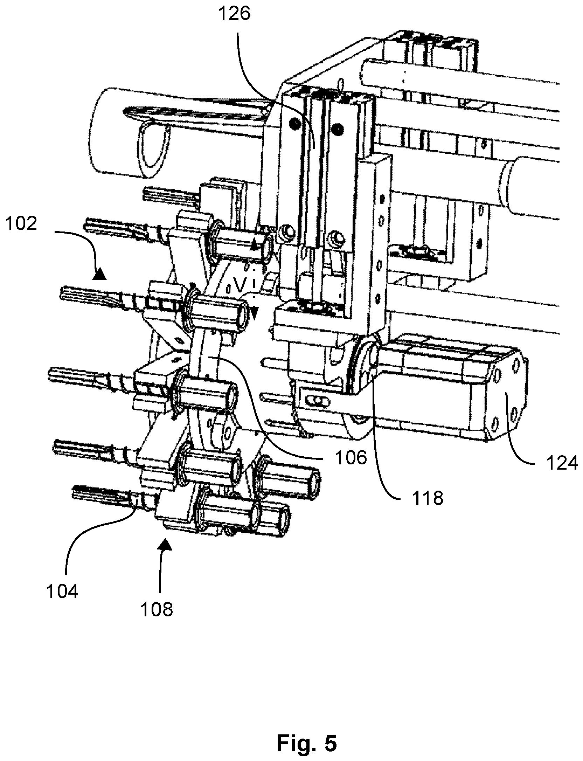

**Fig. 5** zeigt das Magazin 102 in einer Detailansicht in perspektivischer Darstellung.

Zu erkennen ist insbesondere, dass an der Zentralachse 118 des Zentralkörpers 106 ein Drehantrieb **124** angeordnet ist. Der Drehantrieb 124 weist einen elektrischen Motor auf. Durch den Drehantrieb 124 kann das Magazin 102 um die Zentralachse 118 rotiert werden. Somit kann ein in einer der Aufnahmen 108 angeordneter Anker 104 ausgewählt und in eine gewünschte Position rotiert werden. Beispielsweise kann der ausgewählte Anker 104 nach oben rotiert werden.

Weiter weist das Magazin 102 eine Hub- und Senkvorrichtung **126** auf. Die Hub- und Senkvorrichtung 126 weist einen pneumatischen Antrieb auf.

Die Hub- und Senkvorrichtung 126 ist eingerichtet, den Zentralkörper 106 mitsamt seiner Aufnahmen 108 in einer zur Zentralachse 118 senkrechten Ebene, insbesondere in einer gemäß Fig. 5 vertikalen Richtung **V**, zu verschieben.

Im Zusammenspiel des Drehantriebs 124 und der Hub- und Senkvorrichtung 126 sowie dem übrigen Setzgerät 100 (Fig. 2) kann ein Anker 104, insbesondere selbsttätig, gesetzt werden.

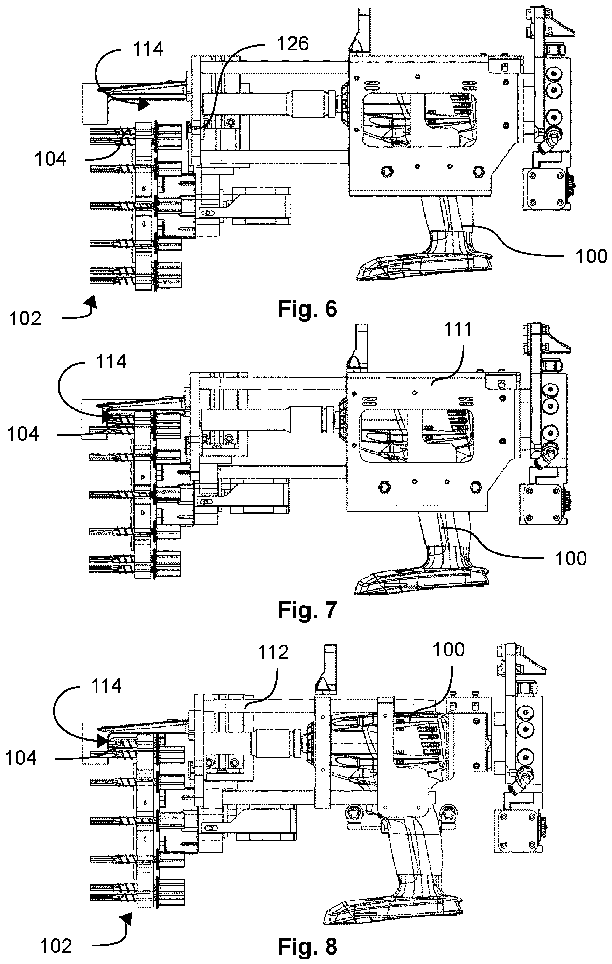

Dies soll anhand der nachfolgenden **Fig. 6 bis Fig. 10** näher erläutert werden.

Dazu zeigen Fig. 6 bis Fig. 10 aufeinanderfolgende Etappen eines Setzvorganges, an denen eine Verwendung des Setzgeräts 100 mit seinem Magazin 102 zum Setzen eines Ankers 104 näher erläutert werden.

Ausgehend von einer Ausgangssituation, wie sie in Fig. 6 dargestellt ist, wird zunächst das Magazin 102 mithilfe der Hub- und Senkvorrichtung 126 angehoben, bis ein an einer oberen Position befindlicher Anker 104 die Setzposition 114, wie in Fig. 7 gezeigt, erreicht.

Sollte sich der zu setzende Anker 104 dabei nicht bereits an der oberen Position befinden, kann zuvor der Anker 104 an diese obere Position mithilfe des Drehantriebs 124 (Fig. 5) rotiert werden.

Das Setzgerät 100 befindet sich hinter einer Verkleidung **111,** die aus Darstellungsgründen in den nachfolgenden Fig. 8 bis Fig. 10 nicht dargestellt ist.

Das Setzgerät 100 wird mithilfe des Linearantriebs 112 weiter auf das Magazin 102 zu bewegt. Dadurch wird der Anker 104 aus der Aufnahme 108, in der er sich zuvor befunden hatte, herausgelöst, siehe Fig. 8.

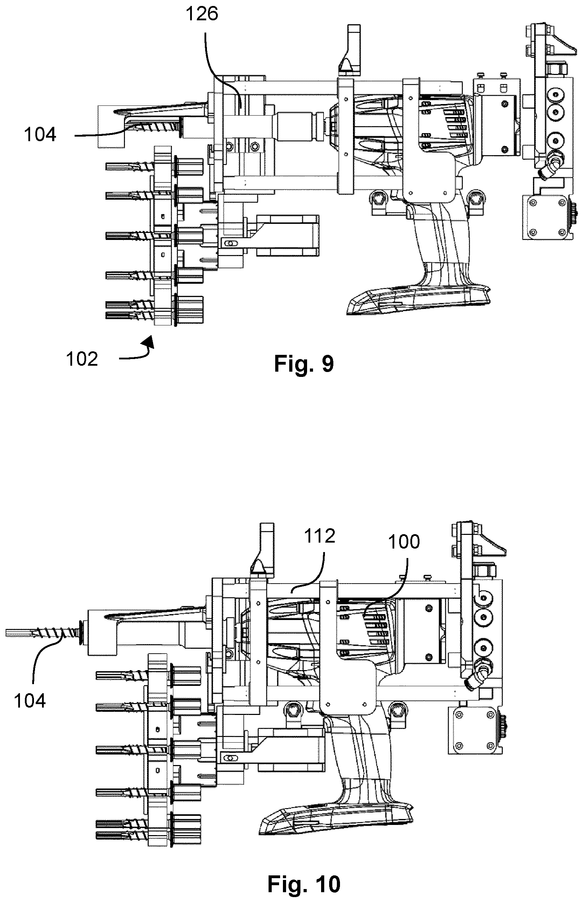

Anschließend wird das Magazin 102 mithilfe der Hub- und Senkvorrichtung 126 wieder nach unten abgesenkt, bis es beispielsweise die in Fig. 9 gezeigte Position erreicht.

Nun kann der Anker 104 gesetzt werden. Ist beispielsweise der Anker 104 ein Betonschraube, so kann ein als Schlagschrauber ausgebildetes Setzgerät 100 den Anker 104 setzen, beispielsweise in ein zuvor erstelltes Bohrloch einschrauben.

Dazu kann das Setzgerät 100 bei Bedarf mithilfe des Linearantriebs 112 noch weiter auf das Magazin 102 zu bewegt werden, bis es beispielsweise die in Fig. 10 gezeigte Position erreicht.

Denkbar ist, je nach Typ des Ankers 104 den Anker 104 durch unterschiedliche Manöver zu setzen. Ein solches Manöver kann bei einem als Schraubanker ausgebildetem Anker 104 eine Drehbewegung sein. Der Anker 104 kann also geschraubt werden. Bei einem einzuschlagenden Anker 104, beispielsweise bei einem als Schlagbolzen ausgebildeten Anker 104, kann das Setzgerät 100 als Bohrhammer und / oder als Meißelmaschine ausgebildet sein. Insbesondere kann es den Anker 104 einschlagen.

### Bezugszeichenliste

- 10: Bauroboter
- 12: Fahrwerk
- 14: Gehäuse
- 16: Steuerraum
- 18: Manipulator
- 20: Endeffektor
- 22: Rechnereinheit
- 23: Programmcode
- 24: Mikroprozessor
- 26: Zwischenlager
- 100: Setzgerät
- 102: Magazin
- 104: Anker
- 106: Zentralkörper
- 108: Aufnahme
- 110: Setzwerkzeug
- 111: Verkleidung
- 112: Linearantrieb
- 114: Setzposition
- 116: Schnittstelle
- 118: Zentralachse
- 120: Klammerarm
- 122: freies Ende
- 123: Öffnung
- 124: Drehantrieb
- 126: Hub- und/oder Senkvorrichtung
- III: Ausschnitt
- V: Richtung

## Patentansprüche

1. **Magazin** (102) zur Aufnahme von Ankern (104), umfassend einen Zentralkörper (106), wobei der Zentralkörper (106) wenigstens eine Aufnahme (108) für einen Anker (104) aufweist, wobei die Aufnahme (108) zwei Klammerarme (120) aufweist.

2. Magazin nach dem vorhergehenden Anspruch, **dadurch gekennzeichnet, dass** wenigstens einer der Klammerarme (120) ein freies Ende (122) aufweist.

3. Magazin nach einem der vorhergehenden Ansprüche, **dadurch gekennzeichnet, dass** der Zentralkörper (106) drehsymmetrisch ist.

4. Magazin nach einem der vorhergehenden Ansprüche, **dadurch gekennzeichnet, dass** das Magazin (102) mehrere Aufnahmen (108) aufweist.

5. Magazin nach einem der vorhergehenden Ansprüche, **dadurch gekennzeichnet, dass** der Zentralkörper (106) an einer Zentralachse (118) drehbar gelagert ist.

6. Magazin nach einem der vorhergehenden Ansprüche, **dadurch gekennzeichnet, dass** das Magazin (102) einen Drehantrieb (124) aufweist zur Drehung des Zentralkörpers (106) um die Zentralachse (118).

7. Magazin nach einem der vorhergehenden Ansprüche, **dadurch gekennzeichnet, dass** das Magazin (102) eine Hub- und / oder Senkvorrichtung (126) aufweist, die eingerichtet ist, den Zentralkörper (106) in einer zur Zentralachse (118) senkrechten Ebene zu verlagern.

8. Magazin nach einem der vorhergehenden Ansprüche, **dadurch gekennzeichnet, dass** in einer der Aufnahmen (108) ein Anker (104) eines ersten Typs und in einer anderen, zweiten Aufnahme (108), ein Anker (104) eines zweiten Typs aufgenommen ist.

9. **Werkzeugmaschine,** beispielsweise Setzgerät (100) oder Bauroboter (10), mit einem Magazin (102) nach einem der vorhergehenden Ansprüche.

10. Werkzeugmaschine nach dem vorhergehenden Anspruch, **dadurch gekennzeichnet, dass** die Werkzeugmaschine als Bauroboter (10) ausgebildet ist.
